# EUROPEAN PATENT APPLICATION

(11) **EP 2 639 926 A2**
(43) Date of publication of application: **18.09.2013**
(21) Application number: 12199719.1
(22) Date of filing: 28.12.2012
(51) Int. Cl.: H02J 7/34

(54) **Fuel cell hybrid system and method for charging rechargeable battery thereof**

(30) Priority: 14.03.2012 US 201261610886 P; 19.12.2012 US 201213719365
(71) Applicant: Samsung SDI Co., Ltd., Yongin-si, Gyeonggi-do (KR)
(72) Inventor: KIM, Dong-Rak, Gyeonggi-do (KR); SONG, In-Seob, Gyeonggi-do (KR); PARK, Jeong-Kurn, Gyeonggi-do (KR); CHOI, Jong-Rock, Gyeonggi-do (KR); CHO, Hye-Jung, Gyeonggi-do (KR)
(74) Representative: Mounteney, Simon James

(57) **Abstract**

A fuel cell hybrid system comprising a fuel cell stack, a rechargeable battery, a control unit and a dc/dc converter connected between the fuel cell stack and the rechargeable battery. The control unit is adapted to charge the rechargeable battery with energy from the fuel cell stack by causing the dc/dc converter to output a voltage that is lower than the maximum charging voltage of the rechargeable battery.

## Description

### BACKGROUND OF THE INVENTION

### (a) Field of the Invention

The present invention relates to a fuel cell hybrid system and a method for charging a rechargeable battery in the fuel cell hybrid system.

### (b) Description of the Related Art

Various rechargeable batteries such as a lead storage battery, an alkali storage battery, a lithium-ion battery, a nickel metal hydride battery, a nickel-cadmium battery, and the like are known. Among these various rechargeable batteries, the lithium-ion battery has excellent advantages compared with other rechargeable batteries and, is consequently widely used. A lithium-ion battery is typically very light and has a high energy density that is twice that of a nickel-cadmium battery and six times that of a lead storage battery. The lithium-ion battery has further advantages in that its electromotive force is great, it is chargeable even in an incomplete discharge state and power loss occurring due to self-discharge is very small.

However, in the case of a typical lithium-ion battery, when a charging period at the maximum voltage for charging increases, side reactions such as electrolyte solution decomposition, overcharging, lithium electrodeposition, and the like are more likely to occur to the detriment of the battery cycle-life.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a fuel cell hybrid system that may extend a cycle-life of a lithium-ion battery and a method for charging a rechargeable battery in the fuel cell hybrid system.

Accordingly, a first aspect of the invention provides a fuel cell hybrid system as set-out in Claim 1. Preferred features of this aspect of the invention are set out in Claims 2 to 7.

A second aspect of the invention provides a method of charging a rechargeable battery as set out in Claim 6. Preferred features of this aspect of the invention are set out in Claims 8 to 17.

Such a fuel cell hybrid system serves to extend the cycle-life of the rechargeable battery by decreasing a capacity decrease rate of the rechargeable battery according to iterative charge and discharge.

As a result of the decrease in the capacity decrease rate of the rechargeable battery, it is possible to reduce the design capacity of the rechargeable battery. By employing such a low-capacity rechargeable battery in the fuel cell hybrid system, it is possible to reduce the production cost of a product.

As charging voltage of the rechargeable battery becomes lower, it is possible to improve the efficiency of a converter by reducing a boosting ratio of the converter.

### BRIEF DESCRIPTION OF THE DRAWINGS

FIG. 1 is a fuel cell hybrid system according to an embodiment of the present invention.
FIG. 2 is a graph to describe a general method for charging and discharging a rechargeable battery in a fuel cell hybrid system.
FIG. 3 is a graph to describe a method for charging and discharging a rechargeable battery in a fuel cell hybrid system according to an embodiment of the present invention.
FIG. 4 is a graph illustrating an example of experimenting on a change in the available capacity of a rechargeable battery according to charging voltage.
FIG. 5 is a graph illustrating another example of experimenting on a change in the available capacity of a rechargeable battery according to charging voltage.
FIG. 6 is a graph illustrating still another example of experimenting on a change in the available capacity of a rechargeable battery according to charging voltage.

### DETAILED DESCRIPTION

The present invention will be described more fully hereinafter with reference to the accompanying drawings, in which the embodiments of the invention are shown. As those skilled in the art would realize, the described embodiments may be modified in various different ways, all without departing from the scope of the present invention.

Further, in various embodiments, constituent elements having the same configuration as the first embodiment will be referred to using the same reference numerals. In other embodiments, only a configuration different from the first embodiment will be described..

The drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising," will be understood to imply the inclusion of stated elements but not the exclusion of any other elements.

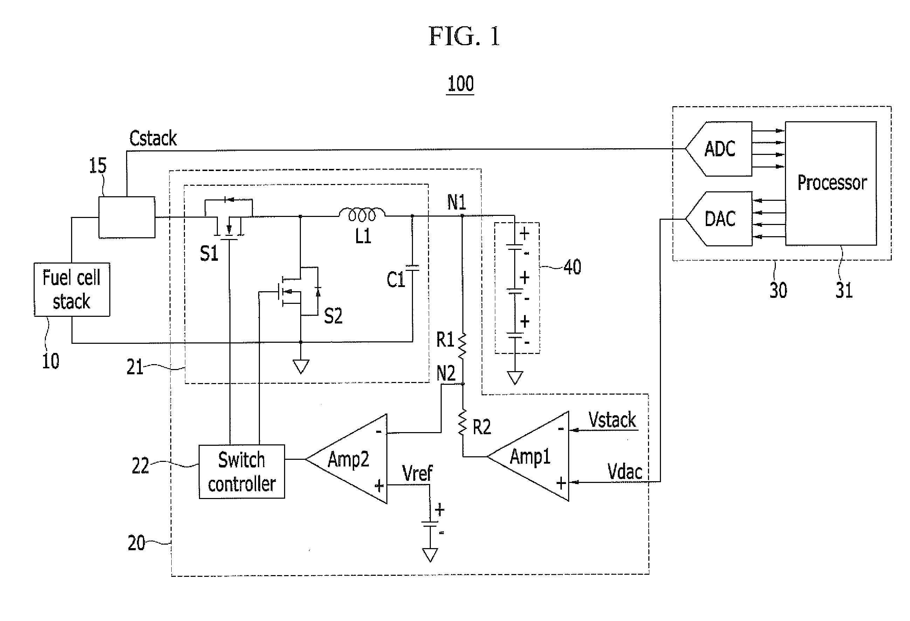

FIG. 1 illustrates a fuel cell hybrid system 100 according to an embodiment of the present invention.

Referring to FIG. 1, the fuel cell hybrid system 100 includes a fuel cell stack 10, a current measurement unit 15, a direct current to direct current (DC/DC) converter 20, a control unit 30, and a rechargeable battery 40.

The fuel cell stack 10 is supplied with fuel from a fuel storage unit (not shown) and is supplied with an oxidizing agent from an oxidizing agent supply unit (not shown) to produce electrical energy. Fuel used in the fuel cell hybrid system 100 commonly refers to carbon hydrogen based fuel in a liquid or gas state such as methanol, ethanol or natural gas, liquefied petroleum gas (LPG), and the like. As an oxidizing agent reacting to hydrogen, the fuel cell hybrid system 100 may use oxygen gas stored in a separate storage means or may use air.

The fuel cell stack 10 may produce electrical energy according to various schemes. For example, a polymer electrode membrane fuel cell (PEMFC) scheme or a direct oxidation fuel cell scheme may be employed. The PEMFC scheme is a scheme of generating hydrogen by reforming fuel and generating electrical energy by electrochemically reacting hydrogen and oxygen. The direct oxidation fuel cell is a scheme of generating electrical energy through direct reaction between liquid or gas fuel and oxygen in a unit cell.

The current measurement unit 15 is connected to a first terminal of the fuel cell stack 10. The current measurement unit 15 produces a current amount signal (Cstack) by measuring current flowing from the fuel cell stack 10. The current measurement unit 15 transfers the current amount signal (Cstack) to the control unit 30.

The control unit 30 includes an analog-to-digital converter (ADC), a processor 31, and a digital-to-analog converter (DAC).

The ADC converts, to a digital signal, the current amount signal (Cstack) of the fuel cell stack 10 that is an analog signal, and transfers the converted digital signal to the processor 31. The current amount signal (Cstack) indicates a current amount flowing from the fuel cell stack 10. The ADC generates a digital current amount signal corresponding to a current amount indicated by the current amount signal (Cstack).

The processor 31 receives the digital current amount signal to generate a digital control signal for adjusting the power conversion efficiency of the DC/DC converter 20. The processor 31 may evaluate performance of the fuel cell stack 10 based on the digital current amount signal. When the digital current amount signal is greater than a predetermined threshold value, the processor 31 may determine that the performance of the fuel cell stack 10 is in a normal state. When the digital current amount signal is less than the predetermined threshold value, the processor 31 may determine that the performance of the fuel cell stack 10 is deteriorated.

The DAC converts the digital control signal to an analog control signal (Vdac). The analog control signal (Vdac) is transferred to the DC/DC converter 20.

The DC/DC converter 20 adjusts the power conversion efficiency of output power of the fuel cell stack 10 based on the analog control signal (Vdac). The DC/DC converter 20 transfers the output power of the fuel cell stack 10 to the rechargeable battery 40.

The DC/DC converter 20 includes a power converter 21, a first amplifier Amp1, a second amplifier Amp2, a first distributed resistance R1, a second distributed resistance R2, and a switch controller 22.

The power converter 21 includes a first switch S1, a second switch S2, an inductor L1, and a capacitor C1.

The first switch S1 includes a gate connected to the switch controller 22, one end connected to the current measurement unit 15, and another end connected to one end of the inductor L1.

The second switch S2 includes a gate connected to the switch controller 22, one end connected to another end of the first switch S1, and another end connected to a second terminal of the fuel cell stack 10.

The inductor L1 includes one end connected to another end of the first switch S1 and another end connected to one end of the capacitor C1.

The capacitor C1 includes one end connected to another end of the inductor L1 and another end connected to the second terminal of the fuel cell stack 10.

The power converter 21 converts output power of the fuel cell stack 10 according to a switching operation between the first switch S1 and the second switch S2 and transfers the converted output power to a first node N1. When the first switch S1 is turned on, a current amount transferred to the first node N1 via the inductor L1 increases and voltage of the first node N1 becomes high. In this instance, energy is stored in the inductor L1 and the second switch S2 is in an off-state.

When the first switch S1 is turned off and the second switch S2 is turned on, current generated by the energy stored in the inductor L1 is transferred to the first node N1. During the above period, a current amount transferred from the inductor L1 to the first node N1 decreases and voltage of the first node N1 becomes low.

As described above, by alternately turning on the first switch S1 and the second switch S2, it is possible to adjust a current amount transferred to the first node N1 and voltage. A current amount transferred to the first node N1 and voltage are determined based on duty of the first switch S1 and the second switch S2.

The first amplifier Amp1 includes a first input end (-) in which stack voltage (Vstack) of the fuel cell stack 10 is input, a second input end (+) in which the analog control signal (Vdac) is input, and an output end from which a difference between the stack voltage (Vstack) and the analog control signal (Vdac) is amplified to predetermined gain and thereby output. The stack voltage (Vstack) may be measurement voltage or predetermined voltage of the fuel cell stack 10.

The first distributed resistance R1 includes one end connected to the first node N1 and another end connected to a second node N2.

The second distributed resistance R2 includes one end connected to the second node N2 and another end connected to an output end of the first amplifier Amp1.

At least one of the first distributed resistance R1 and the second distributed resistance R2 may be variable resistance. In this instance, the control unit 30 may adjust output voltage of the fuel cell stack 10 through the DC/DC converter 20 by changing resistance of at least one of the first distributed resistance R1 and the second distributed resistance R2.

Voltage corresponding to a voltage difference between voltage of the first node N1 and output voltage of the first amplifier Amp1 is distributed to the first distributed resistance R1 and the second distributed resistance R2. Voltage of the second node N2 is transferred to a first input end (-) of the second amplifier Amp2.

The second amplifier Amp2 includes the first input end (-) in which the voltage of the second node N2 is input, a second input end (+) in which reference voltage (Vref) is input, and an output end from which a difference between two input signals is amplified and thereby output. The second amplifier Amp2 amplifies the difference between the reference voltage (Vref) and the voltage of the second node N2 to a predetermined gain and transfers the amplified voltage difference to the switch controller 22.

The switch controller 22 is connected to the output end of the second amplifier Amp2 to control duty of the first switch S1 and the second switch S2 based on an output signal of the second amplifier Amp2.

The rechargeable battery 40 is connected to the first node N1 and is charged with a current amount transferred to the first node N1 and voltage. Here, the rechargeable battery 40 is assumed to be a lithium-ion battery.

However, in addition to the lithium-ion battery, various types of rechargeable batteries such as a lithium polymer battery, a nickel-cadmium battery, a nickel metal hydride battery, a lead storage battery, an alkali storage battery, and the like may be employed for the rechargeable battery 40.

To secure the maximum capacity, the lithium-ion battery is charged according to a constant current charging scheme and a constant voltage charging scheme. The constant current charging scheme is a scheme of charging a battery with a constant current amount. The constant voltage charging scheme is a scheme of charging a battery with constant voltage.

According to the constant current charging scheme, the lithium-ion battery is charged until a state of charge (SOC) becomes 80%. Since the lithium-ion battery is charged according to the constant current charging scheme, voltage of the lithium-ion battery gradually increases. While the the voltage of the lithium-ion battery is gradually increasing, voltage of the lithium-ion battery reaches the maximum charging voltage when the SOC becomes 80%. The maximum charging voltage indicates rated voltage for charging the lithium-ion battery with SOC 100%.

When voltage of the lithium-ion battery reaches the maximum charging voltage, the lithium-ion battery is charged according to the constant voltage charging scheme until the SOC becomes 100%. In the constant voltage charging scheme, the SOC of the lithium-ion battery is fitted to 100% by gradually reducing a current amount while maintaining the maximum charging voltage.

In a section where the lithium-ion battery is charged according to the constant voltage charging scheme, the voltage of the lithium-ion battery is maintained at the maximum charging voltage. According to an increase in the section where the lithium-ion battery is charged with the maximum charging voltage according to the constant voltage charging scheme, side reactions such as an electrolyte solution decomposition, overcharging, lithium electrodeposition, and the like, are deepened whereby the cycle-life of the lithium-ion battery is reduced.

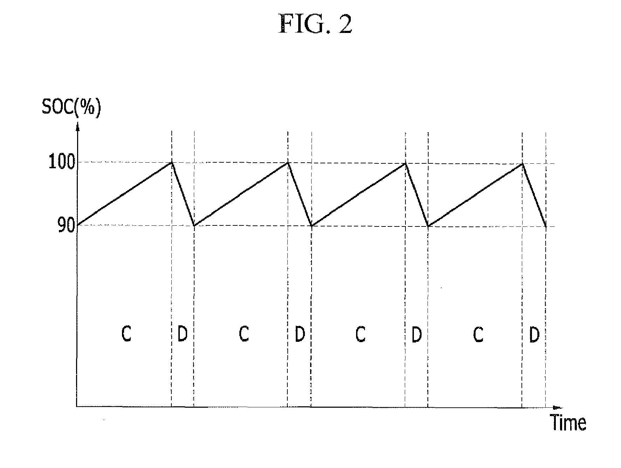

FIG. 2 is a graph to describe a general method for charging and discharging a rechargeable battery in a fuel cell hybrid system.

Referring to FIGS. 1 and 2, the fuel cell hybrid system 100 supplies power produced in the fuel cell stack 10 to a load and a balance of plant (BOP). While supplying the power to the load and the BOP, the fuel cell hybrid system 100 does not produce power in an air depletion section (D) to improve performance of the fuel cell stack 10. The air depletion section (D) is maintained for about 20 seconds at about every ten minutes. In the air depletion section (D), the rechargeable battery 40 is discharged in correspondence to the load and the BOP.

In a remaining section excluding the air depletion section n(D), that is, a charging section (C) of about ten minutes, the rechargeable battery 40 is charged with the power produced in the fuel cell stack 10.

Due to discharge in the air depletion section (D), an SOC of the rechargeable battery 40 is assumed to decrease to be about 90%. Also, a discharge amount of the rechargeable battery 40 in the air depletion section (D) is determined based on a power amount supplied to the load and the BOP.

The rechargeable battery 40 is charged with the maximum charging voltage according to the constant voltage charging scheme in the charging section C, and the SOC of the rechargeable battery 40 reaches 100%. The charging section (C) of the rechargeable battery 40 is relatively long compared to the air depletion section (D).

As described above, in the fuel cell hybrid system 100, a process of charging the rechargeable battery 40 with the maximum charging voltage for a long period of time is repeated. As the rechargeable battery 40 that is the lithium-ion battery is charged with the maximum charging voltage for a long period of time, side reaction such as electrolyte solution decomposition, overcharge, lithium electrodeposition, and the like may be deepened. Accordingly, a cycle-life of the rechargeable battery 40 may be deteriorated.

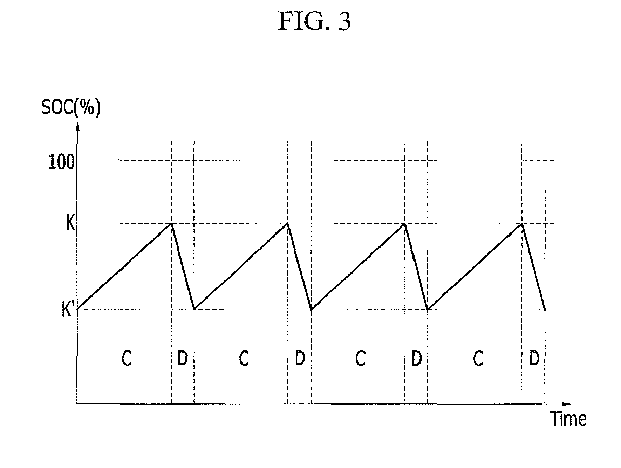

FIG. 3 is a graph to describe a method for charging and discharging a rechargeable battery in a fuel cell hybrid system according to an embodiment of the present invention.

Referring to FIGS. 1 and 3, in the fuel cell hybrid system 100, the rechargeable battery 40 is charged with power produced in the fuel cell stack 10 in the charging section (C), and is discharged in correspondence to the load and the BOP in the air depletion section (D).

The DC/DC converter 20 of the fuel cell hybrid system 100 converts output power of the fuel cell stack 10 to voltage lower than the maximum charging voltage of the rechargeable battery 40 by a predetermined level. The maximum charging voltage indicates rated voltage for charging the rechargeable battery with SOC 100%.

Accordingly, the rechargeable battery 40 is charged with voltage lower than the maximum charging voltage in the charging section (C).

When the fuel cell hybrid system 100 charges the rechargeable battery 40 with charging voltage lower than the maximum charging voltage by a predetermined level, the rechargeable battery 40 is charged with SOC k% lower than SOC 100% in the charging section (C). That is, even though the rechargeable battery 40 is charged according to the constant voltage charging scheme, the rechargeable battery 40 is charged with charging voltage lower than the maximum charging voltage. Therefore, the SOC of the rechargeable battery 40 does not reach 100%.

For example, when the maximum charging voltage of the rechargeable battery 40 is 4.2V, the DC/DC converter 20 may convert the output power of the fuel cell stack 10 to voltage of 4.1V and thereby charge the rechargeable battery 40. When the rechargeable battery 40 having the maximum charging voltage of 4.2V is charged with voltage of 4.1V, the rechargeable battery 40 is charged with about SOC 90%.

As described above, the fuel cell hybrid system 100 charges the rechargeable battery 40 with the first SOC K% by charging the rechargeable battery 40 with charging voltage lower than the maximum charging voltage by a predetermined level in the charging section (C). The fuel cell hybrid system 100 discharges the rechargeable battery 40 with second SOC K'% in the air depletion section (D).

The first SOC is determined based on a voltage value of charging voltage of the rechargeable battery 40, that is, charging voltage lower than the maximum charging voltage by a predetermined level. The second SOC is determined based on a power amount supplied to the load and the BOP in the air depletion section (D).

The available capacity of the rechargeable battery 40 gradually decreases as charging and discharging are repeated. When the rechargeable battery 40 is charged and discharged with the maximum charging voltage up to a reference cycle, the available capacity of the rechargeable battery 40 quickly decreases. On the other hand, when the rechargeable battery 40 is charged and discharged with the charging voltage lower than the maximum charging voltage up to the reference cycle, the available capacity of the rechargeable battery 40 slowly decreases.

When the rechargeable battery 40 is charged and discharged with the charging voltage lower than the maximum charging voltage by a predetermined level up to the reference cycle, the available capacity of the rechargeable battery 40 in the reference cycle varies based on a voltage value of the charging voltage. The reference cycle indicates the minimum number of cycles enabling charge and discharge of the rechargeable battery 40 capable of satisfying the performance of the fuel cell hybrid system 100.

For example, in the fuel cell hybrid system 100, the rechargeable battery 40 needs to be chargeable and dischargeable at least 1000 times. In this case, the reference cycle of the rechargeable battery 40 may be determined as 1000 cycles.

In the fuel cell hybrid system 100, it is desirable that the available capacity of the rechargeable battery 40 is at least 50% of the initial design capacity of the rechargeable battery 40. Accordingly, even when the rechargeable battery 40 is charged and discharged up to the reference cycle as well as to the initial zero-th cycle, the available capacity of the rechargeable battery 40 is at least 50% of the design capacity.

Accordingly, the charging voltage of the rechargeable battery 40 may be determined as charging voltage corresponding to a case where the available capacity of the rechargeable battery 40 is at least 50% of the design capacity when the rechargeable battery 40 is charged and discharged up to the reference cycle, among charging voltage lower than the maximum charging voltage by a predetermined level.

The charging voltage that satisfies the available capacity of the rechargeable battery 40 to be at least 50% of the design capacity in the reference cycle and that is lower than the maximum charging voltage is voltage within the range of about 92% to 98% of the maximum charging voltage. That is, the charging voltage is voltage lower than the maximum charging voltage by about 2% to 8%.

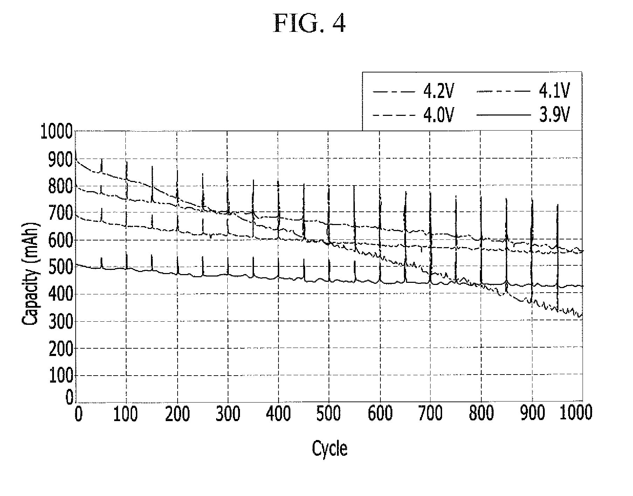

Alternatively, the charging voltage of the rechargeable battery 40 may be determined as voltage that maximizes the available capacity of the rechargeable battery 40 when the rechargeable battery 40 is charged and discharged up to the reference cycle in the charging voltage lower than the maximum charging voltage by a predetermined level. The charging voltage of the rechargeable battery 40 may be experimentally determined. An experimental example of determining the charging voltage of the rechargeable battery 40 will be described with reference to FIGS. 4 to 6.

As described above, by charging the rechargeable battery 40 with charging voltage lower than the maximum charging voltage by a predetermined level, it is possible to prevent a cycle-life of the rechargeable battery 40 from being deteriorated due to side reaction occurring when the rechargeable battery 40 is charged with the maximum charging voltage for a long period of time.

In the fuel cell hybrid system 100, to charge the rechargeable battery 40 with voltage lower than the maximum charging voltage in the charging section (C), output voltage of the DC/DC converter 20 needs to be outputted at voltage lower than the maximum charging voltage of the rechargeable battery 40.

A method of outputting the output voltage of the DC/DC converter 20 at the voltage lower than the maximum charging voltage of the rechargeable battery 40 includes a first method of changing resistance of the first distributed resistance R1 and the second distributed resistance R2, and a second method of changing a voltage value of the analog control signal (Vdac) in the control unit 30.

Initially, the first method of changing resistance of the first distributed resistance R1 and the second distributed resistance R2 will be described.

For example, let us assume that when the first distributed resistance R1 and the second distributed resistance R2 have the same resistance, the DC/DC converter 20 changes the output power of the fuel cell stack 10 to the maximum charging voltage of the rechargeable battery 40.

Here, by changing the resistance of the first distributed resistance R1 and the second distributed resistance R2, it is possible to control the charging voltage of the rechargeable battery 40 to be lower than the maximum charging voltage. When the resistance of the first distributed resistance R1 is adjusted to be smaller than the resistance of the second distributed resistance R2, a voltage value of the second node N2 increases compared to a case where the first distributed resistance R1 and the second distributed resistance R2 have the same resistance. When the voltage value of the second node N2 increases, a difference between the voltage of the second node N2 and the reference voltage (Vref) increases. Therefore, an output value of the second amplifier Amp2 increases. The switch controller 22 adjusts off-duty of the first switch S1 and the second switch S2 to lower voltage output to the first node N1. When the voltage of the first node N1 becomes low, the difference between the voltage of the second node N2 and the reference voltage (Vref) decreases.

The switch controller 22 adjusts the off-duty of the first switch S1 and the second switch S2 to lower voltage of the first node N1 so that the difference between the voltage of the second node N2 and the reference voltage (Vref) may become zero. Until the difference between the voltage of the second node N2 and the reference voltage (Vref) becomes zero, the voltage output to the first node N1 is lowered.

As described above, by changing the resistance of the first distributed resistance R1 and the second distributed resistance R2 of the DC/DC converter 20, it is possible to convert the output power of the fuel cell stack 10 to voltage lower than the maximum charging voltage of the rechargeable battery 40.

Next, the second method of changing, by the control unit 30, a voltage value of the analog control signal (Vdac) will be described.

The control unit 30 evaluates the performance (e.g., deterioration) of the fuel cell stack 10 based on the current amount signal (Cstack) indicating a current amount flowing from the fuel cell stack 10. The control unit 30 transfers, to the DC/DC converter 20, the analog control signal (Vdac) for adjusting the power conversion efficiency of the DC/DC converter 20 based on the performance of the fuel cell stack 10.

The DC/DC converter 20 converts power of the fuel cell stack 10 based on the analog control signal (Vdac) and transfers the converted power to the rechargeable battery 40. Specifically, on-duty of the first switch S1 and the second switch S2 varies based on the analog control signal (Vdac). Accordingly, regardless of deterioration of the fuel cell stack 10, the power transferred to the rechargeable battery 40 is controlled to be constant. In this instance, the control unit 30 according to an exemplary embodiment of the present invention may change a voltage value of the analog control signal (Vdac) to charge the rechargeable battery 40 with charging voltage lower than the maximum charging voltage.

For example, when the performance of the fuel cell stack 10 is in a normal state, the control unit 30 outputs the voltage value of the analog control signal (Vdac) at low voltage with a predetermined level.

When the voltage value of the analog control signal (Vdac) is outputted at the low voltage with the predetermined level, voltage output from the first amplifier Amp1 becomes low and a voltage value of the second node N2 decreases. When the voltage value of the second node N2 decreases, a difference between the voltage of the second node N2 and the reference voltage (Vref) increases. Accordingly, an output value of the second amplifier Amp2 increases.

The switch controller 22 decreases on-duty of the first switch S1 to lower voltage output to the first node N1.

As described above, since the control unit 30 changes the voltage value of the analog control signal (Vdac), the rechargeable battery 40 is charged with voltage lower than the maximum charging voltage of the rechargeable battery 40.

Hereinafter, an experiment result of measuring a capacity decrease rate of a rechargeable battery by charging the rechargeable battery with the maximum charging voltage and voltage lower than the maximum charging voltage will be described.

FIG. 4 is a graph illustrating an example of experimenting on a change in the available capacity of a rechargeable battery according to charging voltage. In the graph, a horizontal axis indicates the number of charge and discharge cycles and a vertical axis indicates the capacity (mAh) of the rechargeable battery.

Referring to FIG. 4, the graph shows results of performing charging and discharging using charging voltage 4.2V, 4.1V, 4.0V, and 3.9V with respect to a lithium-ion rechargeable battery which is used for a mobile phone and of which maximum charging voltage is 4.2V.

Table 1 is the example of experimenting on a change in the available capacity of the lithium-ion rechargeable battery using charging voltage 4.2V, 4.1V, 4.0V, and 3.9V.

**[Table 1]**

| | Capacity (mAh) | | | |
|---|---|---|---|---|
| Cycle | 4.2V | 4.1V | 4.0V | 3.9V |
| 0 | 920 | 825 | 695 | 510 |
| 100 | 820 | 755 | 650 | 490 |
| 200 | 750 | 720 | 640 | 480 |
| 300 | 706 | 695 | 620 | 475 |
| 400 | 630 | 688 | 600 | 470 |
| 500 | 590 | 655 | 590 | 450 |
| 600 | 540 | 645 | 585 | 450 |
| 700 | 475 | 620 | 580 | 450 |
| 800 | 420 | 600 | 580 | 430 |
| 900 | 375 | 590 | 550 | 420 |
| 1000 | 320 | 555 | 555 | 420 |

When charging and discharging is performed with the maximum charging voltage of 4.2V, the available capacity of the rechargeable battery quickly decreases according to an increase in the number of cycles. On the other hand, when charging and discharging is performed with voltage lower than the maximum charging voltage, the available capacity of the rechargeable battery slowly decreases according to an increase in the number of cycles.

The initial available capacity of the rechargeable battery in a case where charging and discharging is performed with charging voltage of 4.1V is small about 10% compared to a case where charging and discharging is performed with the maximum charging voltage of 4.2V. However, after the 400-th cycle, it can be seen that the available capacity of the rechargeable battery in a case where charging and discharging is performed with charging voltage of 4.1V is great compared to a case where charging and discharging is performed with the maximum charging voltage of 4.2V.

The initial available capacity of the rechargeable battery in a case where charging and discharging is performed with charging voltage of 4.0V is small about 25% compared to a case where charging and discharging is performed with the maximum charging voltage of 4.2V. However, after the 500-th cycle, it can be seen that the available capacity of the rechargeable battery in a case where charging and discharging is performed with charging voltage of 4.0V is great compared to a case where charging and discharging is performed with the maximum charging voltage of 4.2V.

The reference cycle of the rechargeable battery 40 capable of satisfying the performance of the fuel cell hybrid system 100 is assumed as 1000 cycles.

When comparing the available capacity of the rechargeable battery in a case where the rechargeable battery is charged and discharged with each of charging voltage 4.1V, 4.0V, and 3.9V up to the reference cycle, it can be seen that the available capacity of the rechargeable battery in two cases where charging and discharging is performed with the charging voltage of 4.1V and 4.0V is highest in the1000-th cycle. Meanwhile when charging and discharging is performed with the charging voltage of 3.9V, it can be seen that the available capacity is about 50% of the design capacity in the 1000-th cycle.

Accordingly, when applying the rechargeable battery used for the experiment to the fuel cell hybrid system 100, the charging voltage of the rechargeable battery to determine the first SOC may be determined as 4.1V to 3.9V. The charging voltage 4.1V, 4.0V, and 3.9V is charging voltage within the range of 92% to 98% of the maximum charging voltage. Meanwhile, when 3.9V is used as the charging voltage of the rechargeable battery, loss of the available capacity of the rechargeable battery is great compared to a case where 4.1 V or 4.0V is used as the charging voltage of the rechargeable battery. Therefore, it is desirable to use 4.1V or 4.0V as the charging voltage.

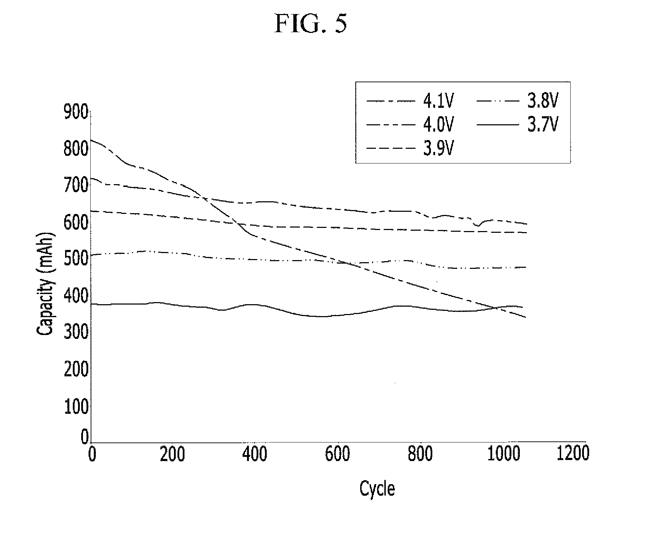

FIG. 5 is a graph illustrating another example of experimenting on a change in the available capacity of a rechargeable battery according to charging voltage. In the graph, a horizontal axis indicates the number of charge and discharge cycles and a vertical axis indicates the capacity (mAh) of the rechargeable battery.

Referring to FIG. 5, the graph shows results of performing charging and discharging using charging voltage 4.1V, 4.0V, 3.9V, 3.8V, and 3.7V with respect to a rechargeable battery for navigation which is easily exposed in a high temperature environment. The rechargeable battery for navigation is designed to have an excellent internal material for a high temperature characteristic and the maximum charging voltage is 4.1V.

Table 2 is the example of experimenting on a change in the available capacity of the rechargeable battery for navigation using charging voltage 4.1V, 4.0V, 3.9V, 3.8V and 3.7V.

**[Table 2]**

| | Capacity (mAh) | | | | |
|---|---|---|---|---|---|
| Cycle | 4.1V | 4.0V | 3.9V | 3.8V | 3.7V |
| 0 | 820 | 710 | 620 | 500 | 380 |
| 100 | 755 | 690 | 615 | 510 | 380 |
| 200 | 720 | 680 | 610 | 520 | 380 |
| 300 | 650 | 670 | 605 | 500 | 375 |
| 400 | 550 | 660 | 600 | 500 | 397 |
| 500 | 525 | 650 | 600 | 500 | 370 |
| 600 | 500 | 640 | 600 | 500 | 370 |
| 700 | 475 | 630 | 600 | 510 | 390 |
| 800 | 450 | 630 | 600 | 510 | 395 |
| 900 | 425 | 625 | 600 | 490 | 385 |
| 1000 | 400 | 615 | 600 | 490 | 395 |

The initial available capacity of the rechargeable battery in a case where charging and discharging is performed with charging voltage of 4.0V is small about 13% compared to a case where charging and discharging is performed with the maximum charging voltage of 4.1V. However, after the 300-th cycle, it can be seen that the available capacity of the rechargeable battery in a case where charging and discharging is performed with charging voltage of 4.0V is great compared to a case where charging and discharging is performed with the maximum charging voltage of 4.1V.

The initial available capacity of the rechargeable battery in a case where charging and discharging is performed with charging voltage of 3.9V is small about 25% compared to a case where charging and discharging is performed with the maximum charging voltage of 4.1V. However, after the 400-th cycle, it can be seen that the available capacity of the rechargeable battery in a case where charging and discharging is performed with charging voltage of 3.9V is great compared to a case where charging and discharging is performed with the maximum charging voltage of 4.1V.

The initial available capacity of the rechargeable battery in a case where charging and discharging is performed with charging voltage of 3.8V is small about 30% compared to a case where charging and discharging is performed with the maximum charging voltage of 4.1V. However, after the 600-th cycle, it can be seen that the available capacity of the rechargeable battery in a case where charging and discharging is performed with charging voltage of 3.8V is great compared to a case where charging and discharging is performed with the maximum charging voltage of 4.1V.

It can be seen that the available capacity of the rechargeable battery in a case where charging and discharging is performed with the charging voltage of 4.0V is highest in the 1000-th cycle.

Meanwhile, when charging and discharging is performed with the charging voltage of 3.7V, it can be seen that the available capacity is less than 50% of the design capacity in the zero-th cycle as well as the 1000-th cycle. The charging voltage 4.0V, 3.9V, and 3.8V is charging voltage within the range of 92% to 98% of the maximum charging voltage. The charging voltage 3.7V is charging voltage less than 92% of the maximum charging voltage. That is, when the charging voltage is less than 92% of the maximum charging voltage, it can be seen that the loss of the available capacity of the rechargeable battery is great.

When the reference cycle of the rechargeable battery 40 in the fuel cell hybrid system 100 is assumed as 1000 cycles, and when applying the rechargeable battery used for the experiment to the fuel cell hybrid system 100, the charging voltage of the rechargeable battery to determine the first SOC may be determined as 4.0V to 3.8V. The charging voltage 4.0V, 3.9V, and 3.8V is charging voltage within the range of 92% to 98% of the maximum charging voltage.

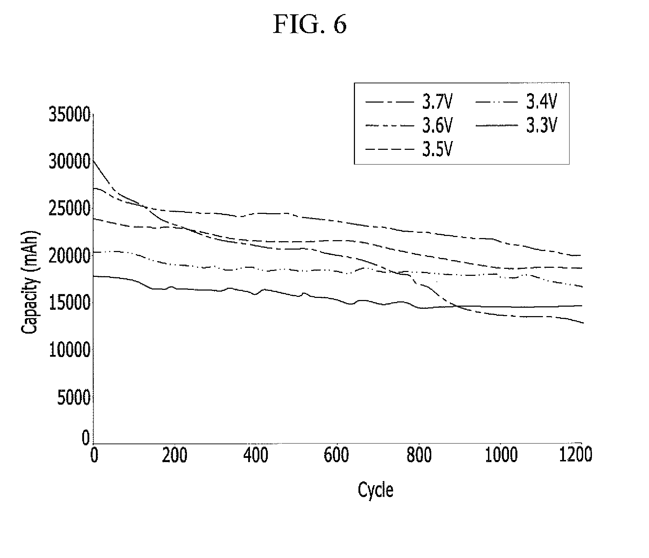

FIG. 6 is a graph illustrating still another example of experimenting on a change in the available capacity of a rechargeable battery according to charging voltage, In the graph, a horizontal axis indicates the number of charge and discharge cycles and a vertical axis indicates the capacity (mAh) of the rechargeable battery.

Referring to FIG. 6, the graph shows results of performing charging and discharging using charging voltage 3.7V, 3.6V, 3.5V, 3.4V, and 3.3V with respect to a high-capacity low voltage lithium iron phosphate (LFP) type rechargeable battery of which maximum charging voltage is 3.7V. Compared to a lithium cobalt oxide (LCO) type rechargeable battery, the LFP type rechargeable battery has a low production cost, a low deterioration, and a very long cycle-life.

Table 3 is the example of experimenting on a change in the available capacity of the LFP type rechargeable battery using charging voltage 3.7V, 3.6V, 3.5V, 3.4V and 3.3V.

**[Table 3]**

| | Capacity (mAh) | | | | |
|---|---|---|---|---|---|
| Cycle | 3.7V | 3.6V | 3.5V | 3.4V | 3.3V |
| 0 | 30000 | 27000 | 24000 | 20500 | 17500 |
| 100 | 26000 | 25400 | 23000 | 20500 | 17000 |
| 200 | 23450 | 25000 | 23200 | 19500 | 16500 |
| 300 | 22950 | 25000 | 23000 | 19500 | 16500 |
| 400 | 22500 | 25000 | 22700 | 19500 | 15750 |
| 500 | 22500 | 24600 | 22600 | 19500 | 15900 |
| 600 | 20750 | 23780 | 22500 | 19500 | 15800 |
| 700 | 19000 | 22980 | 21590 | 19800 | 16000 |
| 800 | 17500 | 22180 | 20290 | 19500 | 15500 |
| 900 | 15360 | 21380 | 18990 | 19500 | 16500 |
| 1000 | 15000 | 20580 | 17690 | 19000 | 16500 |

The initial available capacity of the rechargeable battery in a case where charging and discharging is performed with charging voltage of 3.6V is small about 10% compared to a case where charging and discharging is performed with the maximum charging voltage of 3.7V. However, after the 200-th cycle, it can be seen that the available capacity of the rechargeable battery in a case where charging and discharging is performed with charging voltage of 3.6V is great compared to a case where charging and discharging is performed with the maximum charging voltage of 3.7V.

The initial available capacity of the rechargeable battery in a case where charging and discharging is performed with charging voltage of 3.5 V is small about 20% compared to a case where charging and discharging is performed with the maximum charging voltage of 3.7V. However, after the 300-th cycle, it can be seen that the available capacity of the rechargeable battery in a case where charging and discharging is performed with charging voltage of 3.5V is great compared to a case where charging and discharging is performed with the maximum charging voltage of 3.7V.

The initial available capacity of the rechargeable battery in a case where charging and discharging is performed with charging voltage of 3.4 V is small about 32% compared to a case where charging and discharging is performed with the maximum charging voltage of 3.7V. However, after the 700-th cycle, it can be seen that the available capacity of the rechargeable battery in a case where charging and discharging is performed with charging voltage of 3.4V is great compared to a case where charging and discharging is performed with the maximum charging voltage of 3.7V.

It can be seen that the available capacity of the rechargeable battery in a case where charging and discharging is performed with the charging voltage of 3.6V is highest in the1000-th cycle. Meanwhile, when charging and discharging is performed with the charging voltage of 3.3V, it can be seen that the available capacity is less than 50% of the design capacity in the 1000-th cycle. The charging voltage 3.3V is charging voltage less than 92% of the maximum charging voltage. That is, when the charging voltage is less than 92% of the maximum charging voltage, it can be seen that the loss of the available capacity of the rechargeable battery is great.

When the reference cycle of the rechargeable battery 40 in the fuel cell hybrid system 100 is assumed as 1000 cycles, and when applying the rechargeable battery used for the experiment to the fuel cell hybrid system 100, the charging voltage of the rechargeable battery to determine the first SOC may be determined as 3.6V to 3.4V. The charging voltage 3.6V, 3.5V, and 3.4V is charging voltage within the range of 92% to 98% of the maximum charging voltage.

As described above, by performing charging and discharging with charging voltage lower than the maximum charging voltage by a predetermined level compared to a case where the rechargeable battery is charged and discharged with the maximum charging voltage, it is possible to decrease a capacity decrease rate of the rechargeable battery, thereby extending a cycle-life of the rechargeable battery.

Further, since the fuel cell hybrid system 100 decreases a capacity decrease rate of the rechargeable battery 40, it is possible to reduce the design capacity of the rechargeable battery 40. Accordingly, it is possible to reduce production cost of the fuel cell hybrid system 100.

By reducing a boosting ratio of the DC/DC converter according to a decrease in the charging voltage of the rechargeable battery 40, it is possible to improve the efficiency of the DC/DC converter 20.

The referred drawings and the detailed description of the disclosed invention are only examples of the present invention and thus, are not used to restrict the meaning or limit the range of the present invention disclosed in the claims. Therefore, it will be understood that those skilled in the art may perform various modifications and equivalent embodiments from the description. Accordingly, the technical scope of the present invention will be determined based the claims.

## Claims

1. A fuel cell hybrid system comprising:
a fuel cell stack;
a rechargeable battery;
a control unit; and
a dc/dc converter connected between the fuel cell stack and the rechargeable battery;
wherein the control unit is adapted to charge the rechargeable battery with energy from the fuel cell stack by causing the dc/dc converter to output a voltage that is lower than the maximum charging voltage of the rechargeable battery.

2. A fuel cell hybrid system according to claim 1, wherein the control unit is adapted to charge the rechargeable battery with energy from the fuel cell stack by causing the dc/dc converter to output a voltage that is from 92% to 98% of the maximum charging voltage of the rechargeable battery.

3. A fuel cell hybrid system according to claim 1 or 2, further comprising a current measurement unit for measuring the current of the fuel cell stack.

4. A fuel cell hybrid system according to claim 3, wherein the dc/dc converter comprises first and second distributed resistances, and the control unit is adapted to change the value of at least one of the said first and second distributed resistances in order to modify the output voltage of the fuel cell stack.

5. A fuel cell hybrid system according to claim 4, wherein at least one of the first and second distributed resistances is a variable resistor.

6. A fuel cell hybrid system according to claim 5, wherein the dc/dc converter comprises:
a power converter electrically connected between the fuel cell stack and the rechargeable battery;
a first amplifier electrically connected between the control unit and the power converter ; and
a second amplifier electrically connected between the fist amplifier and the power converter;
wherein a first end of the first distributed resistor is connected to a first node located between the power converter and the rechargeable battery;
a second end of the first distributed resistor is connected to a second node located between an output of the first amplifier and an input of the second amplifier;
a first end of the second distributed resistor is connected to the second node; and
a second end of the second distributed resistor is connected to the output of the first amplifier.

7. A fuel cell hybrid system according to claim 6, further comprising a switch controller and wherein the power converter comprises:
a first switch;
a second switch;
an inductor; and
a capacitor;
wherein the first switch includes a gate connected to the switch controller, a first end connected to the current measurement unit and a second end connected to a first end of the inductor;
the second switch includes a gate connected to the switch controller, a first end connected to the second end of the first switch and a second end connected to a first terminal the fuel cell stack;
a second end of the inductor is connected to a first end of the capacitor; and
a second end of the capacitor is connected to a second terminal of the fuel cell stack.

8. A method of charging a rechargeable battery in a fuel cell hybrid system, wherein the fuel cell hybrid system comprises a fuel cell stack, the rechargeable battery, a control unit and a dc/dc converter connected between the fuel cell stack and the rechargeable battery, and wherein the control unit charges the rechargeable battery with energy from the fuel cell stack by causing the dc/dc converter to output a voltage that is lower than a maximum charging voltage of the rechargeable battery.

9. A method according to claim 8, wherein the dc/dc converter converts the output power of the fuel cell stack to a voltage lower than the maximum charging voltage of the rechargeable battery by from 2 to 8%.

10. A method according to claim 8 or 9, wherein the dc/dc converter comprises a first distributed resistance and a second distributed resistance and the method comprises changing the resistance of at least one of the first distributed resistance and the second distributed resistance in order to modify the output voltage of the fuel cell stack.

11. A method according to claim 10, wherein the dc/dc converter comprises:
a power converter electrically connected between the fuel cell stack and the rechargeable battery and comprising a first switch, a second switch, an inductor, and a capacitor;
a first amplifier electrically connected between the control unit and the power converter;
a second amplifier electrically connected between the first amplifier and the power converter; and
a switch controller;
wherein the control unit adjusts the resistance of the first distributed resistance to be smaller than the resistance of the second distributed resistance;
a voltage value of the second node increases to a value that is higher than its value when the first distributed resistance and the second distributed resistance have the same resistance;
a difference between the voltage of the second node and a reference voltage supplied to the second amplifier increases;
an output value of the second amplifier increases;
the switch controller adjusts the off-duty of the first switch and the second switch to lower the voltage output to the first node; and
the difference between the voltage of the second node and the reference voltage decreases.

12. A method according to one of claims 8 to 11, wherein the control unit evaluates the performance of the fuel cell stack based upon the amount of current flowing from the fuel cell stack.

13. A method according to claim 12, wherein the control unit transfers an analogue control signal based upon the performance of the fuel cell stack to the dc/dc converter for adjusting the power conversion efficiency of the dc/dc converter.

14. A method according to claim 13 when dependent upon claim 11, wherein the control unit varies the on-duty of the first switch and the second switch on the basis of the analogue control signal.

15. A method according to claim 14, wherein the control unit changes a voltage value of the analogue control signal to determine the charging voltage of the rechargeable battery.

16. A method according to claim 15, wherein when the performance of the fuel cell stack is in a normal state, the control unit causes the voltage value of the analogue control signal to be lower than a predetermined level.

17. A method according to claim 16, wherein when the voltage value of the analogue control signal is lower than the predetermined level, a voltage output from the first amplifier becomes low, a voltage value of the second node decreases, a difference between the voltage of the second node and the reference voltage increases, an output value of the second amplifier increases, and the switch controller decreases the on-duty of the first switch to lower the voltage output to the first node.
